# NEW EUROPEAN PATENT SPECIFICATION

(11) **EP 2 542 409 B2**
(45) Date of publication and mention of the opposition decision: **07.10.2026**
(45) Mention of the grant of the patent: 19.12.2018
(21) Application number: 11707768.5
(22) Date of filing: 04.03.2011
(51) Int. Cl.: B32B 27/00

(54) **NON-PVC FILM AND NON-PVC FILM LAMINATE**
PVC-FREIE FOLIE UND PVC-FREIES FOLIENLAMINAT
FILM SANS POLY(CHLORURE DE VINYLE) ET STRATIFIÉ DE FILM SANS POLY(CHLORURE DE VINYLE)

(30) Priority: 04.03.2010 US 310378 P
(43) Date of publication of application: 09.01.2013
(73) Proprietor: Avery Dennison Corporation, Mentor, OH 44060 (US)
(72) Inventor: CHACKO, Sujith, Pasadena, CA 91103 (US); SHIH, Frank, Y., Pasadena, CA 91103 (US); CUMMINGS, Chad, Pasadena, CA 91103 (US)
(74) Representative: Müller-Boré & Partner Patentanwälte PartG mbB
(86) International application number: PCT/US2011/027154
(87) International publication number: WO 2011/109692

(56) References cited:
- EP-A2- 0 359 532
- WO-A1-92/14768
- WO-A2-2005/068195
- JP-A- 2002 322 359
- JP-A- 2003 276 133
- JP-A- 2008 238 481
- US-A- 4 198 330
- US-A- 4 644 030
- US-A- 5 422 189
- US-A- 6 077 648
- US-A1- 2001 051 265
- US-A1- 2003 031 820
- US-A1- 2004 197 572
- US-A1- 2005 074 601
- US-A1- 2005 234 175
- US-A1- 2008 199 704
- US-A1- 2010 009 108
- "Air Products Introduces Hybrid Waterborne Resins at ICE", 14 November 2003 (2003-11-14), pages 1 - 2, XP055643259, Retrieved from the Internet <URL:https://coatings.specialchem.com>
- BASF brochure "Printing and Packaging - resins, performance and formulation additives selection guide for packaging solutions"
- BASF brochure "Benefits, built on each other — The BASF resins and additives portfolio for printing and packaging"
- BASF brochure "Industrial Coatings - raw material selection guide"
- ASTM D882-10 - Standard Test Method for Tensile Properties of Thin Plastic Sheeting
- Evonik data sheet "Hybridur® 870 Polymer Dispersion"
- BASF data sheet "Joncryle) 61 2"press release "Hybridur® 870 and 878 Polymer Binders are New Cost-Effective Waterborne ResinTechnologies with Chemical Resistance of a PUT - and are NMP-Free"

## Description

The present invention is in the field of non-PVC films and non-PVC film laminates for use with small format, and large format graphic films and presentations, advertising media, promotional media, static visual communications, vehicle and product wraps and other commercial applications. The film may be clear, transparent, translucent or have other desirable optical properties.

Polyvinyl chloride (PVC) films have been used widely in a number of promotional and advertising campaigns, such as outdoor graphics applications in the past. Such applications include signs, banners, fleet marketing graphics, architectural and wall covering, consumer product labeling and other pressure sensitive products. However, there is an increasing awareness on the environmental and health impacts and effects of using PVC based products, which has increased significantly in recent years. Currently, there is a movement to reduce or even eliminate PVC-based products from the consumer marketing, promotional and advertising product streams.

Films for outdoor marketing and graphics applications ideally should have at least some of the following properties: printability, durability, color retention, and scratch resistance. Conformability and proper mechanical properties such as tensile elongation and tensile strength are also preferable for the application process. A non-conformable film, i.e. a film which does not have sufficient elongation or flexibility may not follow the contour of the subject or surface to which it is applied, creating bubbles or gaps between the surface and the film. Insufficient elongation properties may make the film hard to apply over a surface, e.g. those surfaces that have curves, angles, ridges and other non-planar configurations, but too much elongation may deform the film and potentially causing a distortion of the printed indicia. Films with a low tensile strength may cause the film to break easily when being stretched such as when the film is being applied to a non-planar surface.

As new PVC replacement films are being developed, some of the films have superior performance in one area, such as printability, but lack adequate functionality with respect to the other properties such as the outdoor durability to make the films acceptable for the demanding advertising and promotional market. One possible way to resolve the foregoing problem is to use a multi-layer film laminate with each layer providing one or more of the desired properties so that the laminate has all the desired properties that are needed.

When used as the outermost protective layer in a film laminate, or simply used as a protective film for a given surface, good outdoor durability and in many cases optical transparency is also required so the indicia on an underneath printable layer can be visible.

Therefore, there is a need for non-PVC-based transparent films and non-PVC film laminates for use with outdoor graphics and other marketing and consumer use applications. WO 2005/068195 A2 discloses a flexible window which is formed by a multi-layer sheet having a transparent flexible base layer and one or more transparent flexible protective layers, wherein the protective layers have a greater abrasion resistance than the base layer. US-patent 5,422,189 A discloses an optically uniform sign face substrate comprising at least one layer of optically uniform dimensionally stable multilayer scrim film laminated between at least two layers of durable thermoplastic sheeting.

The invention is directed to a non-PVC based film product having similar properties to those of conventional PVC offerings that is suitable for use in connection with marketing promotions, graphics, branding campaigns and other printed or imaged communication based initiatives.

In one embodiment of the presently described invention, an optically transparent protective film includes a top layer and a bottom layer. The top layer is selected from the group consisting of urethane-acrylic hybrid polymer free of N-methylpyrrolidone (NMP). The bottom layer is comprised of a non-PVC based polymer, namely a styrene acrylic polymer. The optically transparent protective film further comprises a pressure sensitive adhesive layer, wherein the pressure sensitive adhesive layer is in contact with the bottom layer.

In another embodiment of the presently described invention, a film laminate is provided that includes the optically transparent protective film and a substrate. The substrate layer bears printed or imaged indicia or graphics.

Other features and advantages of the present invention will become apparent to those skilled in the art from the following detailed description. It is to be understood, however, that the detailed description of the various embodiments and specific examples, while indicating preferred and other embodiments of the present invention, are given by way of illustration and not limitation.

These, as well as other objects and advantages of this invention, will be more completely understood and appreciated by referring to the following more detailed description of the presently preferred exemplary embodiments of the invention in conjunction with the accompanying drawings, of which:
FIGURE 1 is a sectional illustration of a film not according to the invention;
FIGURE 2 is a block diagram illustrating an exemplary manufacturing process for making one embodiment of the film;
FIGURE 3 is a flow chart illustrating another manufacturing process for making one embodiment of the film;
FIGURE 4 is a sectional illustration of one exemplary embodiment of a film according to the present invention;
FIGURE 5 is a sectional illustration of a further exemplary embodiment of a film laminate according to the present invention;
FIGURE 6 illustrates the top view of an exemplary embodiment of an advertising graphic applied on a surface according to the present invention; and
FIGURE 7 illustrates an exemplary embodiment of a roll of an advertising graphic according to the present invention.

Unless otherwise indicated, the illustrations in the above figures are not necessarily drawn to scale.

The apparatuses and methods disclosed in this document are described in detail by way of examples and with reference to the figures. Unless otherwise specified, like numbers in the figures indicate references to the same, similar, or corresponding elements throughout the figures. It will be appreciated that modifications to disclosed and described examples, arrangements, configurations, components, elements, apparatuses, methods, materials, etc. can be made and may be desired for a specific application. In this disclosure, any identification of specific shapes, materials, techniques, arrangements, etc. are either related to a specific example presented or are merely a general description of such a shape, material, technique, arrangement, etc. Identifications of specific details or examples are not intended to be, and should not be, construed as mandatory or limiting unless specifically designated as such. Selected examples of apparatuses and methods are hereinafter disclosed and described in detail with reference made to FIGURES.

The present invention relates to a film and a film laminate used for outdoor graphics applications, advertising, promotions and other marketing campaigns. More particularly, the present invention relates to a non-PVC transparent film and non-PVC film laminate for use in such applications. The film and film laminate provide suitable outdoor durability, scratch resistance, gloss, conformability, tensile elongation and tensile strength.

In yet another embodiment of the invention, a non-PVC transparent film includes a top layer and a bottom layer. The top layer is made of urethane-acrylic hybrid polymer. The bottom layer includes a non-PVC emulsion based polymer. Generally, the non-PVC based polymer can be an emulsion based polymer, a solvent based polymer, and/or an extruded polymer. The non-PVC based polymer is a styrene acrylic polymer.

As used herein the term "graphic" or "graphics" refers to a visually perceptible presentation on some surface that is intended to brand, illustrate, entertain, inform, advertise, announce and market a product, service, event or the like.

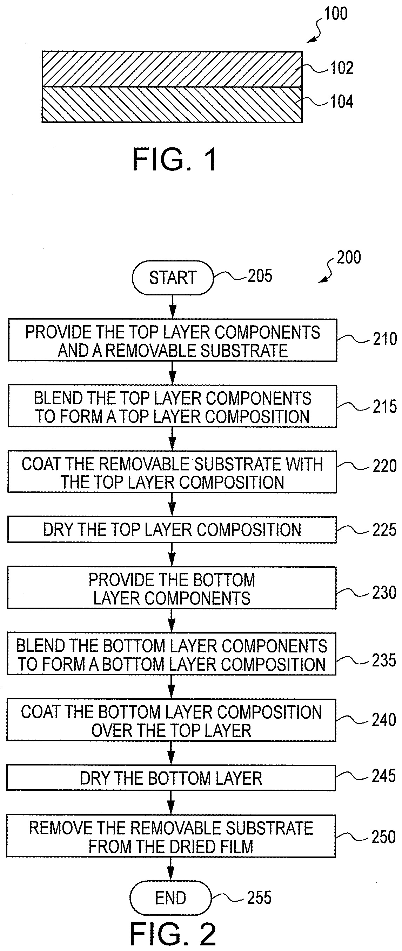

Reference is now directed to the FIGURES in which Figure 1 provides a sectional view of an exemplary film. The film 100 has two layers. The film may be transparent, translucent, clear or have other desirable optical properties. The top layer 102 is a urethane-acrylic hybrid polymer. Bottom layer 104 is in the presently described embodiment a strengthening polymer layer.

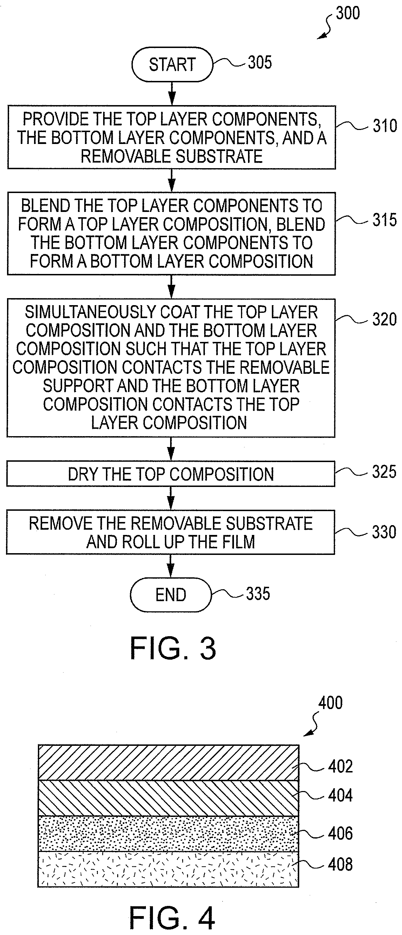

In addition, the film layers may have at least one additive added to either one or both, or two additives added to one or both of the layers. If an intermediate layer is included (see Figure 4) the additive may also be present in the intermediate layer. The additives are selected from a group including UV stabilizing agents, free-radical scavengers, cross-linking agents, thickeners, flow and leveling agents, rheology modifiers, surfactants, defoamers, dispersants, wetting agents, dyes, pigments, co-solvents or combinations thereof.

The urethane-acrylic hybrid polymer of the top layer 102 is a combination of urethane polymer and acrylic polymer mixed at the molecular level. In order to be environmentally friendly, the top layer 102 is preferred to be created from waterborne dispersions, although other methods for producing the urethane-acrylic hybrid polymer may also be used. Typically, there are two methods to make such hybrid polymer dispersions. In a first method, a polyurethane dispersion is prepared. Acrylic monomers are then added to the polyurethane dispersion. The acrylic polymer is formed in the presence of the polyurethane dispersion. In a second method, a polyurethane prepolymer is formed. The acrylic monomers are then added to the prepolymer. The urethane and acrylic polymerizations are completed concurrently. There are numerous publications on these methods. For example, United States Patent No. 3,684,758 to Honig; 4,198,330 to Kaizerman; 4,644,030 to Loewrigkeit; and 5,594,065 to Tien describe the foregoing methods in detail. Publications, patents and patent applications are referred to throughout this disclosure.

The urethane-acrylic hybrid polymer dispersions prepared according to the above described methods have been found to show better mechanical properties when compared to a simple blend of the two polymers due to the molecular level mixing which occurs through use of the foregoing processes. In order to make the formulation even more environmentally friendly, that is to reduce the environmental impact over other preparations, the urethane-acrylic hybrid polymer dispersions are further improved to be free of N-methylpyrrolidone (NMP), a component typically used as a processing solvent in other applications.

Suitable urethane-acrylic hybrid polymer dispersions for use in the compositions of the present invention are those with aliphatic acrylic monomers and aliphatic polyurethane components. As the film products produced will be used in an outdoor environment, the films will be exposed to moisture, such as dew, rain or snow; temperature deviations; light and other conditions which may impact the film performance. For example, moisture may cause components of the film or images thereon to bleach out or fade, and the film itself to whiten. Therefore, maintaining a proper balance of hydrophilic monomers and other components is required in order for this film to achieve the required resistance when exposed to such conditions. The monomers and other components should also be selected so as to be balanced to achieve the required tensile properties, block resistance, scratch resistance, transparency, and gloss. For example, the amount of acrylic present in the urethane-acrylic hybrid polymer controls the tensile properties of this top layer.

Suitable urethane-acrylic hybrid dispersions for use in the present invention are available under the trade name HYBRIDUR from Air Products, Allentown, Pennsylvania, including HYBRIDUR 870; HYBRIDUR 570; HYBRIDUR 580; HYBRIDUR 878; and NEOPAC R9000 from DSM NeoResins, of Waalwijk, The Netherlands.

UV blocking agents and free radical scavengers can be added to the top layer to improve the outdoor durability. UV blocking agents suitable for this application are typically benzotrizole based compounds, or other compounds capable of absorbing UV energy in the required region. Commercially available UV absorbing agents include, without limitation, TINUVIN 400 DW, TINUVIN 292 from BASF, Ludwigshafen, Germany; and HOSTAVIN 3310 from Clariant; Muttenz, Switzerland. The amount of UV blocking agent can range from about 0% to about 5%.

Free radical scavengers may also be added to the top layer of the film to improve the weather durability of the top layer. Suitable free radical scavengers include but are not limited to TINUVIN 1130, TINUVIN 123 DW from BASF, Ludwigshafen, Germany; and HOSTAVIN 3065 from Clariant, Muttenz, Switzerland. The amount of free radical scavengers can range from about 0% to about 5%.

Other UV blocking systems can also be used for improving weathering durability of this film. These include nano sized zinc oxide and cerium oxide or combinations thereof which may be used to achieve the UV resistance required for the film. Suitable nano metal oxides include but are not limited to NANOBYK 3840, NANOBYK 3810 from BYK Additives, of Altana, Wesel, Germany. The total amount of additives may range from about 0% to about 10%.

Continuing with a discussion of the laminate provided in Figure 1, the bottom layer 104 has a polymer layer that improves tensile properties of the overall film 100 which may also reduce the cost of the overall film. Examples of such strengthening polymer layer include, without limitation, emulsion based polymers, solvent based polymers, and extruded polymers. Suitable polymers are styrene acrylic polymers. UV stabilizers and free radical scavengers can also be added to the bottom layer. The additives together can range from about 0 % to about 5% of the total formulation.

Suitable acrylic polymers include acrylic emulsions that have superior block resistance, tensile properties and clarity, such as JONCRYL 617A available from BASF, Ludwigshafen, Germany.

The thickness of the top layer 102 can range from about 0.5 mil (12.7 microns) to about 5 mils (127 microns). The thickness of the bottom layer 104 can range from about 0.5 mil (12.7 microns) to about 5 mils (127 microns). When the thickness of the top layer 102 is too thin, the chemical resistance, scratch resistance and outdoor durability of the film may suffer. When the thickness of the bottom layer 104 is too thin, the tensile properties of the whole film may not be sufficient. Contrary to the above, when the top and bottom layers 102, 104 respectively, are too thick, the thickness of the construction may also impact the conformability of the film.

The film 100 can be generated using any process suitable for such purpose. In one embodiment, the film compositions were first deposited onto a removable support or carrier layer by techniques well known to those skilled in the art. Examples of such techniques include die coating, knife coating, curtain coating and reverse roll coating. The removable support can be separated after the compositions have been dried. An exemplary removable support can be selected from a group including a siliconized belt, a release paper, and a release film such as PET or other suitable materials.

An exemplary method of making a film is illustrated in the block diagram 200 of Figure 2. After starting the process at step 205, the next step 210 is to provide the top layer components and a removable support. Next, at step 215, the top layer components are blended to form a top layer composition. The top layer composition includes urethane-acrylic hybrid dispersions and at least one of free radical scavenger and UV blocking agent. Next, at step 220, the removable support is coated with the top layer composition, such as by slot die coating, curtain coating or other acceptable methods. At step 225, the top layer composition is dried. Drying may occur by using a heated or ambient air environment, curing or by other suitable methods. At step 230, the bottom layer components are provided. At step 235, the bottom layer components are blended to form a bottom layer composition. The bottom layer composition includes emulsion polymer or solvent polymer and at least one of a free radical scavenger and a UV blocking agent. The bottom layer composition is coated over the top layer at step 240, such as by slot die coating. At step 245, the bottom layer composition is dried. Alternatively, the film is further laminated with a pressure sensitive adhesive (PSA) coated release liner before proceeding to the next step. At step 250, the removable support is removed or separated from the dried two layer film. The separation or removal can be accomplished by using a peel blade or knife which serves to separate the film from the carrier or support layer. Alternatively, the film can be separated by the carrier at a sharp angle so that the film can be easily picked up from the carrier or support. The film is rolled up and ready for use. Alternatively, the film can be cut and separated into sheets or sections of equivalent sizes or of varying lengths. The method ends at step 255.

The top layer and the bottom layer are substantially coextensive with one another, that is the edges and/or sides are aligned and in juxtaposition.

In another embodiment of the invention, the compositions of the top layer and the bottom layer can be coated onto a removable support simultaneously. Flowchart 300 in Figure 3 illustrates such an exemplary process. After starting at step 305, the next step 310 is to provide the top layer components, the bottom layer components and a removable support. Next, at step 315, the top layer components are blended to form a top layer composition. Substantially, simultaneously, the bottom layer components are blended to form a bottom layer composition. Next, at step 320, the top layer composition and the bottom layer composition are coated simultaneously using a dual die with the top layer composition contacting the removable support and the bottom layer composition contacting the top layer composition. Additionally, the top layer and bottom layer can be formed separately and then extruded or coated on to the support or carrier through a common apparatus. At step 325, the coated compositions are dried. The film is further laminated with a PSA coated release liner before proceeding to the next step. After drying of the compositions, the removable support or carrier layer can be removed from the dried two layer film in step 330. The film can be rolled up and ready for use or sheeted depending on the requirements of the particular application. The film may then be printed or imaged by conventional methods such as by ink jet and electrostatic printing technologies or alternatively, the film can be applied over another substrate which may have been printed or imaged previously. The method ends at step 335.

In addition to the foregoing, the film can be further overcoated with a varnish or other material to provide a glossy appearance. This step may occur during the film forming process, after printing or after collection of the material after the production process has been completed.

The film of the present invention can be used in operative association with a graphic or other message. As used herein, operative association includes applying the film over the graphic or message, including the graphic or message as part of the film either as an additional layer, such as a printing layer or previously printed layer, or applying a graphic or message over the film.

The film can be used as a printable media for outdoor applications, architectural and transportation type advertising campaigns and the like. The film can also be used as a protective film to be laminated over a subject, such as a protective laminate for electronic appliances, architectural, artistic or aesthetic elements, a retro-reflective license plate, a retro-reflective signage film, a name plate, a label, automotive exterior and interior parts, and the like. Additional exemplary uses may include safety signs, a graphic display, governmental mandated displays, military applications or a surface that needs protection in the outdoor environment.

The film of the invention also includes an adhesive layer. The adhesive is a pressure sensitive adhesive that is optically transparent, and when used to contact the printed indicia, would not affect the printed indicia. The adhesive may be pattern coated, and may be selected for particular properties such as permanent, removable or repositionable and the like. The adhesive can be random copolymer adhesives or block copolymer adhesives. Random copolymer adhesives include those based upon acrylic and/or methacrylic copolymers, α-olefin copolymers, silicone copolymers, chloroprene/acrylonitrile copolymers, and the like. Block copolymer adhesives including those based upon linear block copolymers (i.e., A-B and A-B-A type), branched block copolymers, star block copolymers, grafted or radial block copolymers, and the like, and natural and synthetic rubber adhesives. A description of useful pressure sensitive adhesives can be found in Encyclopedia of Polymer Science and Engineering, Vol. 13. Wiley-Interscience Publishers (New York, 1988). Additional descriptions of useful pressure sensitive adhesives can be found in Encyclopedia of Polymer Science and Technology, Vol. 1, Interscience Publishers (New York, 1964).

A release liner can be used to protect the adhesive from inadvertent contact with unintended surfaces. Any release liner suitable for the chosen adhesive can be used. For pressure sensitive adhesives, release liners can be coated papers or films, and super calendared paper, for example. Coating materials suitable for release liners include, for example, silicone-based and fluorine-based materials, or any other material that has the desired releasing properties, for example, waxes and carbamates.

Figure 4 illustrates one embodiment of the current invention. The film 400 has a top layer 402, a bottom layer 404, an intermediate layer 406 and a release liner 408. Upon application, the release liner can be peeled off to expose the adhesive surface. The film can be attached to the surface to be protected through the adhesive layer. The intermediate layer is a pressure sensitive adhesive layer.

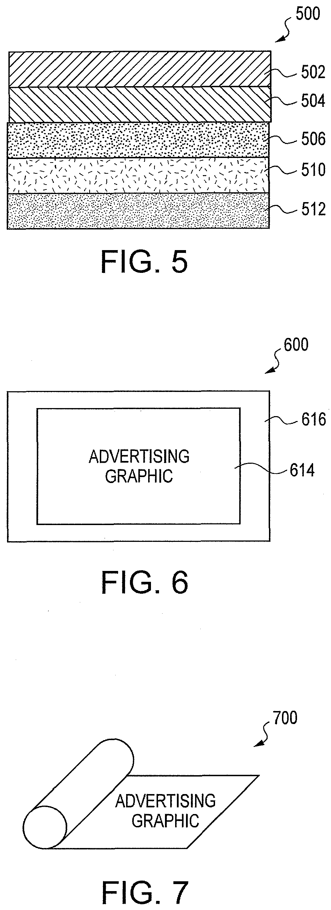

The film can also be used as part of a larger film laminate. Figure 5 illustrates a cross-sectional view of one embodiment of a film laminate. The film laminate 500 is comprised of a top layer 502, a bottom layer 504, a pressure sensitive adhesive layer 506, an ink layer 510, and an underlying substrate layer 512. Though referred to as an ink layer, the ink may not necessarily form a continuous layer. Various printable materials can be used as the underlying substrate layer. A non-PVC based printable material is preferred to make the whole film laminate non-PVC based. International patent application PCT/US08/84812 describes various films created using non-PVC compositions. Ink or toner anchor coatings, such as polyvinyl alcohol can be added to increase the anchorage of the printing to the laminate.

Figure 6 illustrates a top view of an exemplary embodiment of an advertising graphic film applied to a surface according to the present invention. The film laminate bearing advertising graphic 614 is posted on a surface 616 through the use of an adhesive.

Figure 7 illustrates an exemplary embodiment of a roll of the film laminate 700 according to the present invention.

Additional components, such as thickeners, flow and leveling agents, and rheology modifiers can be added to each of the top and bottom formulations to archieve desired coating quality. Examples of suitable thickeners include, without limitation, ACRYSOL RM-2020 NPR, TM8W, and UCAR POLYPHOBE 115 TR from Dow Chemicals, Midland, Michigan. Examples of suitable flow and leveling agents include without limitation, ZONYL FS300 from Dupont; Polyfox PF-156A from Omnova Solutions; and Masurf from Mason Chemical Company and others with similar chemistry. The percent incorporation can vary from 0% to 10% in both layers. Additional viscosity modifiers can be included in the formulation to modify the viscosity to a desired level and/or to impart desirable flow characteristics. These can be urethane based alkali swellable associative thickeners. Products like UCAR polyphobe 102 from Arkema Emulsion Systems or Rheolate 350 from Elementis are typical examples that can be used in the formulations. The percent incorporation can vary from between 0% to 10% in both layers. Other components, such as water or isopropyl alcohol (IPA) can also be added to the formulation at about 0% to about 10%.

Cross-linking agents can be added to the top layer formulations to improve the mechanical properties of that film layer. Examples of suitable cross-linking agents include, without limitation, polyaziridine based CX-100 from DSM Neo Resins, Waalwijk, The Netherlands; UCARLINK XL-25SE, ERL-4221, ERL-4234 from Dow Chemicals, Midland, Michigan; and COATOSIL 1770, SILQUEST A-187 from Momentive Performance Materials Inc., Waterford, New York.

Without limitation, other additives, for example, surfactants, defoamers, dispersants, wetting agents, dyes, pigments and co-solvents known to those skilled in the art can be added to the composition of each of the top layer and bottom layer.

### Test Methods

### Thickness

Film thickness is measured using TMI Model 49-70 Precision Micrometer available from Testing Machines Inc. in Ronkonkoma, NY. The specimen is placed between an upper and a lower anvil. The upper anvil rests on top of the specimen and the thickness is measured and displayed on the digital readout.

### CIE L*a*b* Color Space

This test is used to describe the color of a sample. This 3-dimensional color space system was developed by the International Commission on Illumination (CIE), and defines L* as representing the lightness of the color, ranging from 0 (black) to 100 (white). In this system, a* represents the color's position along the red (magenta)/green axis, in which negative values represent green and positive values represent red or magenta, and b* represents the color's position along the blue/yellow axis, in which negative values represent blue and positive values represent yellow. The test is conducted using a COLOR I 5 Benchtop Spectrophotometer available from X-Rite, Inc., Grand Rapids, Michigan. The test method is TAPPI T524 om-94.

### Accelerated Weathering

Accelerated weathering test simulates the damaging effects of long term outdoor exposure of materials by exposing test samples to light, moisture and temperature extremes. Sample is tested and observed for light fastness (fading of colors), and weatherability (cracking, chalking, curling, shrinkage, etc...). An Atlas CI65A Xenon Arc Weather-Ometer from Atlas Material Testing Technology LLC in Chicago, IL is used for this test.

A printing pattern with white, yellow, magenta, cyan and black stripes is first printed on a printable substrate. The film of the current invention, which may be transparent, translucent, clear or have other desirable optical properties, is then laminated over the print layer to make a film laminate through the use of a pressure sensitive adhesive. The sample is first tested for CIE L*a*b* Color Space before placed in the Weather-Ometer. The sample is allowed to age in the Weather-Ometer for a designated amount of time. The sample is taken out of the Weather-Ometer for CIE L*a*b* Color Space reading and observation for any changes in shrinkage, chalking, cracking etc... If there is no visible change after 2000 hours, and the changes in L*, a* and b* together, represented by ΔE, is less than 10, the sample is given a pass grade. ΔE value is calculated using the following formula: $Δ E = \sqrt{\left(Δ{L}^{2}+Δ{a}^{2}+Δ{b}^{2}\right)} .$

### Gloss

Gloss is measured using a BYK Gardner Micro-TRI-Gloss Gloss Meter from BYK Gardner USA in Columbia, MD. The universal measurement angle 60° is used for the measurement. Typically the acceptable gloss reading is 80 or higher.

### Tensile Strength and Tensile Elongation

The tensile elongation and tensile strength of the film is tested using Instron Model 5542 from Instron Co. in Canton, MA. A modified ASTM D882 was used to determine the tensile strength and percentage elongation of the films of the present invention. The procedure is as follows:
1. A 1 inch x 4 inch (25.4 mm x 101.6 mm) specimen was cut out in the machine direction.
2. Grip the film 1 inch (25.4 mm) from the end at both the ends, so the separation between the grips is 2 inches (50.8 mm).
3. Set the crosshead speed at 12 inches per minute ("ipm") (304.8 mm per minute).
4. Obtain the tensile strength, which is the product of tensile stress times, the thickness of the film. The tensile strength at break is the maximum stress that occurs at break times the thickness of the film.
5. The % elongation is reported by the machine.

The standard requires a minimum ultimate elongation of 180% and a minimum tensile strength of 0.5 pound per square inch ("psi") (6,895 N/m²). The presence or absence of pressure sensitive adhesive (PSA) on the film does not appreciably alter the strength and/or elongation of the film. As such, wherever the film in the examples below includes PSA, the tensile elongation test was performed using the same film but without the layer of PSA.

### Rivet Testing

Test samples approximately 2.5 inch (63.5 mm) x 2.5 inch (63.5 mm) are applied over painted 4 inch (101.6 mm) x 12 inch (304.8 mm) aluminum panels from Frontier Tank Center in Richfield, Ohio. Brazier rivet heads which are 11.4 mm (diameter) X 3.3 mm (height) X 7.62 mm (shaft diameter) (0.45" (diameter) X 0.13" (height) X 0.3" (shaft diameter)) are uniformly distributed over the aluminum panel. Application is done so as to minimize forming any wrinkles especially around these rivet heads. Entrapped air is released with the use of pin pricks while a brush with hard bristles and plastic squeegee is used to get the best conformation of the film around the rivet. The sample is dwelled for 24 hours at ambient condition. The diameter of the lifted portion of the film around the rivet is measured and recorded. The sample is then placed in Atlas Ci5000 Xenon Arc Weather-Ometer from Atlas Electric Devices Co. in Chicago, Illinois, using a UVB 313 bulb for 1000 hours. The sample is then taken out and the diameter of the film lifted around the rivets is measured again. When the change in diameter is less than 0.0625 inch (1.58 mm), the sample is given a pass grade.

### Shrinkage Test

Test sample is coated with a pressure sensitive adhesive under the trade name S8072 from Avery Dennison Corporation in Pasadena, CA at about 30 gram per square meter (gsm) coat weight. The sample is then attached to a clean aluminum panel from Q-Lab Corporation of Cleveland, OH. The sample is dwelled at ambient condition for 24 hours. A 5 inch (127 mm) cross hatch in both machine direction (MD) and cross-machine direction (CD) are made on the film. The sample is then aged at 160°F (71°C) for 48 hours. The dimension change in the MD and CD are measured. If the shrinkage is less than 0.33% in both directions, the sample is given a pass grade.

### Examples

The chemicals used in the following examples are listed in Table 1 with information on the function, manufacture and location of each.

**Table 1**

| **Name of the Chemical** | **Function** | **Manufacturing Company** | **Location** |
|---|---|---|---|
| HYBRIDUR 870 | Top layer component | Air Products | Allentown, Pennsylvania |
| JONCRYL 617 A | Bottom layer component | BASF | Ludwigshafen, Germany |
| TINUVIN 123 DW | Free radical scavenger | BASF | Ludwigshafen, Germany |
| TINUVIN 400 DW | UV blocking agent | BASF | Ludwigshafen, Germany |
| TINUVIN 292 | UV blocking agent | BASF | Ludwigshafen, Germany |
| TINUVIN 1130 | Free radical scavenger | BASF | Ludwigshafen, Germany |
| TEXANOL ESTER SOLVENT | Solvent | Eastman Chemical | Kingsport, Tennessee |
| DOWANOL DPNB | Solvent | Dow Chemicals | Midland, Michigan |
| VINNAPS EF 811 | Component for additional layers | Wacker Chemicals | Munich, Germany |
| ZONYL FS300 | Flow and leveling agent | Dupont | Wilmington, DE |
| UCAR POLYPHOBE 102 | Viscosity modifier | Arkema Emulsion Systems | Cary, NC |
| ARCRONAL NX4612X | Bottom layer component | BASF | Ludwigshafen, Germany |
| JONCRYL 1987 | Bottom layer component | BASF | Ludwigshafen, Germany |

Table 2 lists five examples of formulations used to create the top layer.

**Table 2**

| Example No. | HYBRIDUR H 870 | TINUVIN 123 DW | TINUVIN 400 DW | TEXANOL | DpNB | Total |
|---|---|---|---|---|---|---|
| | % | % | % | % | % | % |
| 1 | 95.25 | 1.90 | 2.85 | 0.00 | 0.00 | 100.00 |
| 2 | 96.78 | 1.27 | 1.95 | 0.00 | 0.00 | 100.00 |
| 3 | 93.45 | 1.87 | 2.80 | 0.94 | 0.94 | 100.00 |
| 4 | 92.60 | 1.85 | 2.77 | 1.39 | 1.39 | 100.00 |
| 5 | 94.95 | 1.25 | 1.90 | 0.95 | 0.95 | 100.00 |

### Examples 1 to 5 (as reference): Top Layer Compositions

Table 3 lists two examples of formulations used to create the bottom layer.

### Examples 6 to 7 (as reference): Bottom layer compositions

**Table 3**

| Example No. | JONCRYL 617 A | TINUVIN 292 | TINUVIN 1130 | Total |
|---|---|---|---|---|
| | % | % | % | % |
| 6 | 99.0 | 0.50 | 0.50 | 100 |
| 7 | 98.65 | 0.675 | 0.675 | 100 |

Table 4 lists five examples of the film created using Example 5 as the top layer, Example 7 as the bottom layer at various thickness of each layer.

### Examples 8 to 12 (as reference): films

**Table 4**

| Example No. | Thickness of Top layer (mil) | Thickness of Bottom Layer (mil) |
|---|---|---|
| 8 | 0.75 | 0.75 |
| 9 | 1 | 0.5 |
| 10 | 1 | 1 |
| 11 | 1.33 | 0.66 |
| 12 | 2 | 0.5 |

### Example 13 control

HYBRIDUR 870 by itself was made into a film. When the film thickness is about 1.7 mils (43 microns), the tensile elongation is 80%. When the film thickness is about 2.4 mils (61 microns), the tensile elongation is around 150%. When subject to weather-o-meter test, the films show heavy shrinking.

Examples 8 to 12 have been tested for various properties. The films have been tested for film thickness, gloss at 60 degrees, and tensile elongation. For scratch resistance and shrinkage test, each sample is coated with about 30 gsm of a pressure sensitive adhesive under the trade name S8072 from Avery Dennison Corporation in Pasadena, CA. For accelerated weathering and rivet testing, the adhesive coated sample is further laminated onto a printable film. The printable film is Example No. 29B in the PCT application PCT/US08/84812.

Table 5 lists the properties measured for each of the samples. All examples have passed the accelerated weathering test, have a gloss at 60 degree higher than 90, and tensile elongation higher than 200. All of the samples have passed the scratch resistance test, rivet testing, and shrinkage test.

**Table 5**

| Example No. | Total Thickness | Accelerated Weathering | Gloss @ 60 | Tensile Elongation | Rivet Testing | Shrinkage Test |
|---|---|---|---|---|---|---|
| 8 | 1.5 mils | Pass | >80 | <200 | Pass | Pass |
| 9 | 1.5 mils | Pass | >80 | <200 | Pass | Pass |
| 10 | 1.5 mils | Pass | >80 | <200 | Pass | Pass |
| 11 | 2.0 mils | Pass | >80 | <200 | Pass | Pass |
| 12 | 2.0 mils | Pass | >80 | <200 | Pass | Pass |

### Example 13 Three-layer film

A three-layer film was created using HYBRIDUR 870 as the top layer, JONCRYL 617 A as the middle layer, and VINNAPAAS EF 811 as the third layer. Each layer can be from about 0.5 mil (12.7 microns) to about 2 mils (50.8 microns) thick.

### Examples 14-17

Table 6 lists four additional examples of formulations used to create the top layer.

**Table 6**

| Example No. | Hybridur 870 | Tinuvin 400 DW | Tinuvin 123 DW | Texanol | DPnB | Zonyl FS300 | DI Water | UCAR Polyphobe 102 | Rheolate 350 |
|---|---|---|---|---|---|---|---|---|---|
| 14 | 89.56% | 0.91% | 0.73% | 1.41% | 1.41% | 0.28% | 4.70% | 0.99% | |
| 15 | 86.25% | 0.88% | 0.70% | 1.36% | 1.36% | | 9.27% | 0.18% | |
| 16 | 85.56% | 0.87% | 0.69% | 1.35% | 1.35% | | 9.6% | 0.18% | 0.40% |
| 17 | 85.56% | 0.87% | 0.69% | 1.35% | 1.35% | | 9.59% | 0.58% | |

### Examples 18-22

Table 7 lists five additional examples of formulations used to create the bottom layer, wherein Example 20 represents a reference example.

**Table 7**

| Example No. | Joncryl 1987 | Tinuvin 292 | Tinuvin 1130 | UCAR Polyphobe 102 | DI Water | Zonyl FS300 | Texanol | Acronal NX4612X |
|---|---|---|---|---|---|---|---|---|
| 18 | 98.85% | 0.45% | 0.45% | 0.05% | 0.05% | 0.15% | 0.0 | 0.0 |
| 19 | 99.05% | 0.45% | 0.45% | 0.025% | 0.025% | 0.0 | 0.0 | 0.0 |
| 20 | 0.0 | 0.50% | 0.50% | 0.10% | 0.10% | 0.0 | 2.88% | 95.93% |
| 21 | 49.53% | 0.42% | 0.42% | 0.05% | 0.05% | 0.0 | 0.0 | 49.53% |
| 22 | 74.30% | 0.42% | 0.42% | 0.05% | 0.05% | 0.0 | 0.0 | 24.77 |

The foregoing detailed description of the present invention is provided for purposes of illustration, and it is not intended to be exhaustive or to limit the invention to the particular embodiments disclosed. The embodiments may provide different capabilities and benefits, depending on the configuration used to implement the key features of the invention. Accordingly, the scope of the invention is defined only by the following claims.

## Claims

1. An optically transparent protective film comprising:
a top layer; and
a bottom layer substantially coextensive with the top layer, and
wherein the top layer is selected from the group consisting of urethane-acrylic hybrid polymer free of N-methylpyrrolidone (NMP); and
the bottom layer is comprised of a non-PVC based polymer, wherein the non-PVC based polymer is a styrene acrylic polymer, and
further comprising:
a pressure sensitive adhesive layer, and
wherein the pressure sensitive adhesive layer is in contact with the bottom layer.

2. The film as recited in claim 1, wherein the pressure sensitive adhesive layer includes an adhesive selected from the group consisting of a permanent adhesive, a removable adhesive, and a repositionable adhesive.

3. The film as recited in any one of claims 1 to 2, wherein a release layer is provided over the pressure sensitive adhesive layer.

4. A film laminate comprising:
the optically transparent protective film according to any one of claims 1 to 2; and
a substrate layer,
the substrate layer having printed or image indicia thereon.

5. Use of the film or the film laminate as recited in any one of claims 1 to 4 for outdoor graphics applications, advertising campaigns, promotional media, static visual communications, vehicle and product wraps.

## Patentansprüche

1. Optisch transparente Schutzfolie, umfassend:
eine obere Schicht; und
eine untere Schicht, die im Wesentlichen flächengleich mit der oberen Schicht ist, und
wobei die obere Schicht ausgewählt ist aus der Gruppe, bestehend aus einem Urethan-Acrylhybridpolymer, das frei von N-Methylpyrrolidon (NMP) ist; und
die untere Schicht aus einem nicht auf PVC basierenden Polymer gebildet ist, wobei das nicht auf PVC basierende Polymer ein Styrolacrylpolymer ist, und ferner umfassend:
eine druckempfindliche Klebeschicht und
wobei die druckempfindliche Klebeschicht in Kontakt mit der unteren Schicht ist.

2. Folie nach Anspruch 1, wobei die druckempfindliche Klebeschicht einen Klebstoff enthält, der aus der Gruppe ausgewählt ist, bestehend aus einem permanenten Klebstoff, einem entfernbaren Klebstoff und einem wiederpositionierbaren Klebstoff.

3. Folie nach einem der Ansprüche 1 bis 2, wobei eine Trennschicht über der druckempfindlichen Klebeschicht bereitgestellt ist.

4. Laminatfolie, umfassend:
die optisch transparente Schutzfolie nach einem der Ansprüche 1 bis 2; und
eine Substratschicht,
wobei die Substratschicht gedruckte oder Bildmarkierungen darauf aufweist.

5. Verwendung der Folie oder der Laminatfolie nach einem der Ansprüche 1 bis 4 für graphische Anwendungen im Freien, Werbekampagnen, Werbemedien, statische visuelle Kommunikation, Fahrzeug- und Produktverpackungen.

## Revendications

1. Film protecteur optiquement transparent comprenant :
une couche supérieure ; et
une couche inférieure s'étendant sensiblement sur la même surface que la couche supérieure, et
dans lequel la couche supérieure est choisie parmi le groupe constitué de polymère hybride uréthane-acrylique exempt de N-méthylpyrrolidone (NMP) ; et
la couche inférieure comprend un polymère à base non-PVC, dans lequel le polymère à base non-PVC est un polymère styrène-acrylique, et
comprenant en outre :
une couche d'adhésif sensible à la pression, et
dans lequel la couche adhésive sensible à la pression est en contact avec la couche inférieure.

2. Film selon la revendication 1, dans lequel la couche adhésive sensible à la pression comprend un adhésif choisi parmi le groupe constitué d'adhésif permanent, d'adhésif amovible et d'adhésif repositionnable.

3. Film selon l'une quelconque des revendications 1 à 2, dans lequel une couche antiadhésive est prévue au-dessus de la couche adhésive sensible à la pression.

4. Film stratifié comprenant :
le film protecteur optiquement transparent selon l'une quelconque des revendications 1 à 2 ; et
une couche de substrat,
la couche de substrat comportant sur elle des marques imprimées ou des images.

5. Utilisation du film ou du film stratifié tel que décrit dans l'une quelconque des revendications 1 à 4 pour des applications graphiques en extérieur, des campagnes publicitaires, des supports promotionnels, des communications visuelles statiques, ainsi que pour l'habillage de véhicules et de produits.
